# EUROPEAN PATENT SPECIFICATION

(11) **EP 0 441 401 B1**
(45) Date of publication and mention of the grant of the patent: **03.05.1995**
(21) Application number: 91101802.6
(22) Date of filing: 08.02.1991
(51) Int. Cl.: F01N 3/20

(54) **Exhaust gas purification system for an internal combustion engine**
Reinigungsanlage der Verbrennungsgase eines internen Verbrennungsmotors
Système de purification du gaz d'échappement d'un moteur à combustion interne

(30) Priority: 09.02.1990 JP 11563/90 U; 18.01.1991 JP 16826/91
(43) Date of publication of application: 14.08.1991
(73) Proprietor: TOYOTA JIDOSHA KABUSHIKI KAISHA, Aichi-ken (JP)
(72) Inventor: Hirota, Sinya, 1 Toyota-cho, Toyota-shi, Aichi-ken, 471 (JP); Inoue, Tokuta, 1 Toyota-cho, Toyota-shi, Aichi-ken, 471 (JP)
(74) Representative: Tiedtke, Harro, Dipl.-Ing.

(56) References cited:
- DE-A- 3 615 021
- US-A- 3 635 200
- US-A- 3 827 238
- US-A- 3 908 371

## Description

The present invention relates to an exhaust gas purification system for an internal combustion engine provided with a catalyst capable of reducing nitrogen oxides (hereinafter, NOx) under oxidizing conditions and in the presence of hydrocarbons. More particularly, the present invention relates to an exhaust gas purification system wherein hydrocarbons having low boiling points produced from a fuel for the engine is supplied to the catalyst to increase a NOx purification rate of the catalyst.

Combustion at lean air-fuel ratios is effective to improve a mileage characteristic of automobile internal combustion engines, and such lean air-fuel combustion (lean burn) is actually executed in diesel engines and some types of gasoline engines. However, in the lean burn engine, NOx reduction by a three-way catalyst cannot be expected, and therefore, an alternative means for reducing NOx needs to be developed.

As a catalyst capable of reducing NOx even under an oxidising exhaust gas condition of the lean burn engines, JP-A-1-130735 discloses a zeolite catalyst carrying transition metals which can reduce NOx in the presence of hydrocarbons. Also, JP-A-63-283727 proposes an apparatus for supplying hydocarbons to an engine exhaust conduit upstream of the zeolite type catalyst. However, the apparatus includes a particular hydrocarbon source different from the fuel for the engine, and installation of such particular hydrocarbon source would increase cost.

To avoid installing such particular hydrocarbon source, it could be conceived to utilize a portion of the fuel for the engine to supply hydrocarbons to the zeolite type catalyst. However, it was found by the inventors through various tests that merely using fuel will not improve the NOx reduction rate of the zeolite type catalyst. More particularly, the hydrocarbons effective to reduce NOx have a relatively small carbon number (for example, 3-6) per molecule. In contrast, diesel fuel (light oil) mainly includes hydrocarbons having a large carbon number (for example, more than 10) per molecule. As a result, even if the fuel is supplied to the zeolite type catalyst, significant increase of NOx purification rate cannot be expected.

An exhaust gas purification system comprising the features of the pre-characterizing portion of claim 1 is known from US-A-3908371. In this known system, the HC producing means evaporates some of the fuel.

It is an object of the invention to improve the NOx purification rate of an NOx reduction catalyst installed in an exhaust gas purification system according to the pre-characterizing portion of claim 1 by supplying hydrocarbons having low boiling points without installing a particular hydrocarbon source different from the fuel used for combustion in the engine.

This object is achieved by the exhaust gas purification system according to claim 1. The features of the characterizing portion of claim 1 in combination with the features of the pre-characterizing portion of claim 1 result in an improved NOx purification rate of the NOx reduction catalyst, while not needing any particular hydrocarbons source different from the fuel used for combustion in the engine.

The above and other objects, features, and advantages of the present invention will become more apparent and will be more readily appreciated from the following detailed description of the preferred embodiments of the invention taken in conjunction with the accompanying drawings, in which:
FIG. 1 is a schematic system diagram of an exhaust gas purification system for an internal combustion engine in accordance with a first embodiment of the present invention;
FIG. 2 is a schematic elevational side view of the exhaust gas purification system for an internal combustion engine of FIG. 1;
FIG. 3 is a graphical representation of a map of introduced hydrocarbon quantity versus engine speed for the exhaust gas purification system for an internal combustion engine of FIG. 1;
FIG. 4 is a graphical representation of a map of introduced hydrocarbon quantity versus engine load for the exhaust gas purification system for an internal combustion engine of FIG. 1;
FIG. 5 is a graphical representation of a map of opening degree of a flow control valve versus engine speed for the exhaust gas purification system for an internal combustion engine of FIG. 1;
FIG. 6 is a graphical representation of a map of opening degree of a flow control valve versust engine load (fuel injection quantity) for the exhaust gas purification system for an internal combustion engine of FIG. 1;
FIG. 7 is a block diagram illustrating a NOx reduction mechanism of a lean NOx catalyst; and
FIG. 8 is a schematic system diagram of an exhaust gas purification system for an internal combustion engine in accordance with a second embodiment of the present invention.

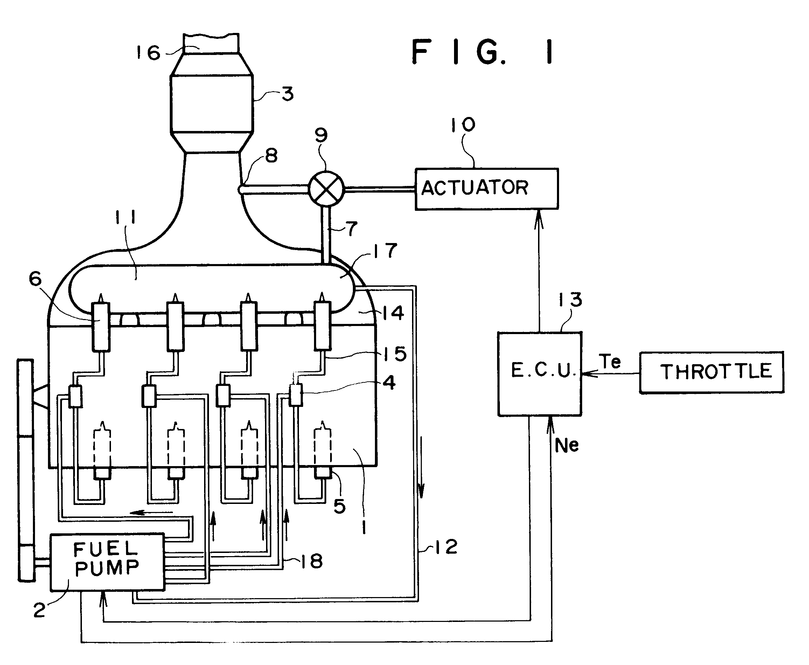

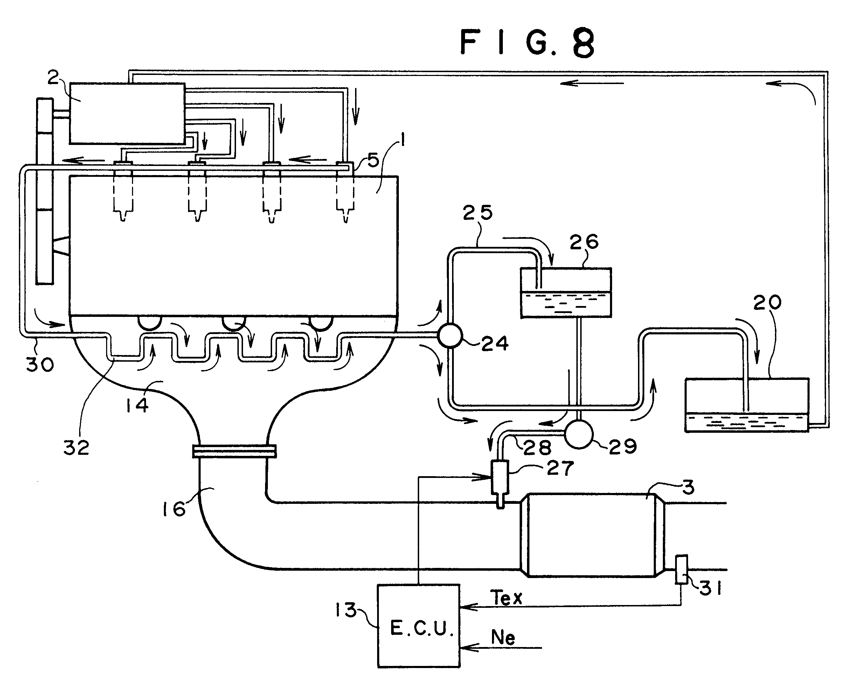

Two embodiments of the invention will be explained below. In a first embodiment, the hydrocarbons of low boiling points are produced by cracking at least a portion of the engine fuel (diesel fuel), as illustrated in FIGS. 1-7. In a second embodiment, hydrocarbons of low boiling points are produced through combined cracking and fractional distillation of the fuel, as illustrated in FIG. 8.

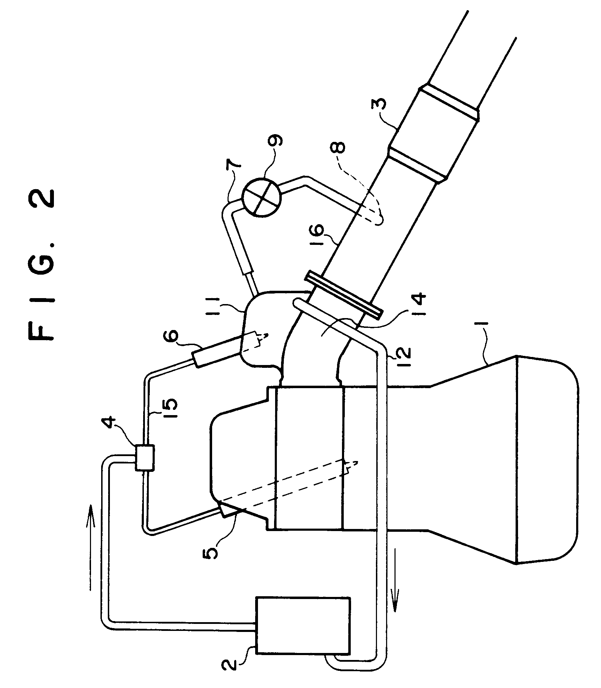

The first embodiment will now be explained. In FIGS. 1 and 2, an engine 1 capable of fuel combustion at lean air-fuel ratios comprises a diesel engine. Diesel fuel (light oil) is supplied by a fuel pump 2 and is injected into each cylinder of the engine through a respective fuel injection nozzle 5. An exhaust conduit 16 is connected to the engine, and a lean NOx catalyst 3 is installed in the exhaust conduit 16 for purifying the exhaust gas. Since the diesel engine 1 is operated at lean air-fuel ratios, the exhaust gas contains excess oxygen, so that the lean NOx catalyst 3 can reduce NOx in the presence of HC.

An exhaust manifold 14 of the engine is provided with a fuel cracking chamber 11, which is located preferably above the exhaust manifold 14. A manifold wall 17 separating the fuel cracking chamber 11 from the interior of the exhaust manifold 14 has a large heat transfer area so that the fuel cracking chamber 11 can be heated to a temperature above 500°C.

A fuel supply pipe 18 extending from the fuel pump 2 to each fuel injection nozzle 5 has a diverging portion such as a T-fitting 4 from which a branch pipe 15 extends to the fuel cracking chamber 11 so that a portion of the diesel fuel is fed into the fuel cracking chamber 11 through an injection nozzle 6 mounted on the fuel cracking chamber 11. The fuel pump 2, the diverging portion 4, the branch pipe 15, the injection nozzle 6, and the fuel cracking chamber 11 constitute an HC producing means for producing hydrocarbons of low boiling points by cracking a portion of the engine fuel.

A cracked-fuel supply pipe 7 extends from the fuel cracking chamber 11 to a cracked-fuel injection port 8 located in the exhaust conduit 16 upstream of the lean NOx catalyst 3. A flow control valve 9 is installed in the cracked-fuel supply pipe 7. Opening degree of the flow control valve 9 is controlled by an actuator 10 which constitutes, for example, a duty control solenoid. The cracked-fuel supply pipe 7, the cracked-fuel injection portion 8, the flow control valve 9, and the actuator 10 constitute an HC supply means for supplying the cracked fuel (hydrocarbons of low boiling points) to the exhaust conduit 16 upstream of the lean NOx catalyst 3.

A fuel return pipe 12 for returning excess fuel remaining in the fuel cracking chamber 11 (fuel which has not been fed to the lean NOx catalyst 3) to the fuel pump 2 is provided at the bottom of the fuel cracking chamber 11.

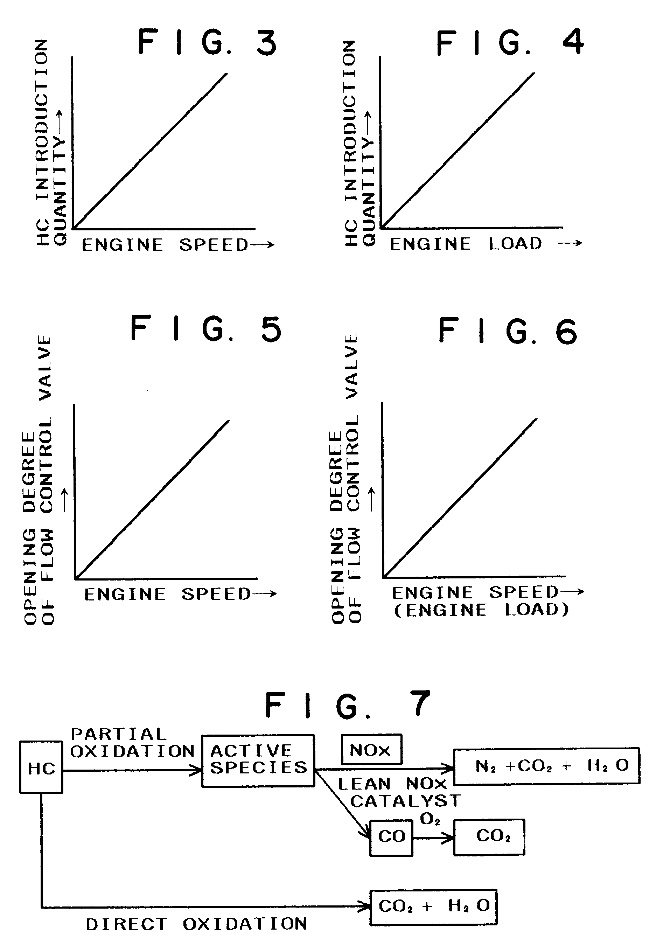

An electronic control unit 13 (hereinafter, ECU) is provided to control the quantity of the cracked fuel fed to the exhaust conduit upstream of the lean NOx catalyst 3. The ECU 13 controls the flow control valve 9 via the actuator 10 as a function of engine speed Ne, so that the opening degree of the flow control valve and thus quantity of fuel supplied increase with increasing engine speed, as illustrated in FIG. 5 and FIG. 3, respectively. Also, the ECU 13 controls the flow control valve 9 as a function of engine load Te, so that the opening degree of the flow control valve and thus the quantity of the supplied fuel increase with increasing engine load (that is, quantity of fuel injected into the cylinders or opening degree of a throttle valve), as illustrated in FIG. 6 and FIG. 4, respectively.

The fuel injectors 5 are electromagnetically operated, and the injection timing and fuel injection quantity thereof is controlled by the ECU 13.

The operation of the first embodiment will now be explained. A portion (about 10 %) of the diesel fuel is fed to the fuel cracking chamber 11 though the injection nozzles 6. This fuel receives heat via the manifold wall 17 from the exhaust gas flowing inside the exhaust manifold and is cracked into hydrocarbons having small carbon numbers (for examples, 3-6) per molecule and therefore, hydrocarbons of low boiling points. This cracking will be caused when the manifold wall is heated to a temperature above about 500°C. A coating of platinum or palladium on the interior of the manifold wall 17 is effective to crack hydrocarbons at wall temperatures below 500°C.

The quantity of hydrocarbons necessary to reduce NOx by the lean NOx catalyst 3 is about 3-5 % of the fuel amount to be injected into the cylinders. The fuel fed to the fuel cracking chamber 11 is controlled to the necessary quantity by the flow control valve 9 and fed to of the exhaust conduit upstream of the lean NOx catalyst 3. The remaining cracked fuel is returned to the fuel pump 2 via the fuel return pipe 12. Since the pressure of the fuel cracking chamber 11 is raised to about 2.8 atms. (=(273 + 500)/273) and the pressure is considerably higher than the exhaust gas pressure, the exhaust gas does not reverse into the cracked-fuel supply pipe 7.

The hydrocarbons of low boiling points introduced into the exhaust conduit 16 upstream of the lean NOx catalyst 3 flows to the lean NOx catalyst 3 where at least a portion of the hydrocarbons is partially oxidized to some active species or radicals (for example, species like CO⁻). The active species react with NOx in accordance with the mechanism of FIG. 7 to reduce NOx and purify the exhaust gas. Due to the supply of the hydrocarbons of low boiling points, the quantity of the active species produced at the lean NOx catalyst 3 is increased to thereby increase the lean NOx purification rate of the lean NOx catalyst 3.

Though the engine 1 comprises a diesel engine in the foregoing explanation, the engine may comprise a gasoline engine operated at lean air-fuel ratios.

Next, the second embodiment of the invention will be explained with reference to FIG. 8. In the second embodiment, explanation for members having structures and functions similar to those of the members of the first embodiment (a diesel engine 1, a fuel pump 2, a lean NOx catalyst 3, a fuel injection nozzle 5, an ECU 13, an exhaust manifold 14, and an exhaust conduit 16, is omitted by denoting like reference numerals to the members.

As illustrated in FIG. 8, a fuel return pipe 30 for returning fuel from the fuel injection nozzles 5 to a fuel tank 20 is zigzagged in the vicinity of the exhaust manifold 14 so that the returning fuel receives as much heat as possible from the exhaust manifold 14 and at least a portion of the returning fuel is cracked in the zigzag portion 32. At least a portion of the components of low boiling points included in the returning fuel and the cracked fuel will be evaporated while the returning fuel flows through the zigzag portion 32. The gas portion of the returning fuel is separated from the liquid portion at a gas/liquid separator 24 which is positioned downstream of the zigzag portion 32. The separated gas components of low boiling points are led to a HC tank 26 via a pipe 25 where they are cooled to 200-300 °C and to be changed to an HC liquid of low boiling points. The fuel return pipe 30, the zigzag portion 32, the gas/liquid separator 24, the pipe 25, and the HC tank 26 constitute HC producing means for producing hydrocarbons of low boiling points using a portion of the fuel for combustion in the engine in the second embodiment.

The HC tank 26 is connected via a pipe 28 with an HC injection nozzle 27 installed in the exhaust conduit 16 upstream of the lean NOx catalyst 3. Also, an HC supply pump 29 is installed in the pipe 28. The HC supply pump 29 raises the pressure of the hydrocarbons of low boiling points from the HC tank 25, and the HC injection nozzle 27 opens to introduce the pressurized hydrocarbons into the portion of the exhaust conduit upstream of the lean NOx catalyst 3. The ECU 13 reads signals of a current engine speed Ne and a current exhaust gas temperature Tex and calculates a necessary HC injection quantity on the basis of a Ne versus Tex map to send an instruction to the HC injection nozzle 27 that the HC injection nozzle should inject hydrocarbons by the calculated HC quantity. The pipe 28, the HC injection nozzle 27, the HC supply pump 29, and the ECU 13 constitute means for supplying hydrocarbons of low boiling points to the exhaust conduit 16 upstream of the lean NOx catalyst 3 in the second embodiment.

The operation of the second embodiment will now be explained. The returning fuel is partially cracked and partially evaporated at the zigzag portion 32 of the fuel return pipe 30. The evaporated fuel is separated from the liquid fuel at the gas/liquid separator 24 and is led to the HC tank 26 where the evaporated fuel is cooled to a liquid and stored. The hydrocarbons stored in the HC tank 26 mainly include hydorcarbons of low boiling points. When the hydrocarbons are introduced into the exhaust conduit 16 upstream of the lean NOx catalyst 3, the hydrocarbons increases the NOx purification rate of the lean NOx catalyst 3.

In accordance with any embodiment of the present invention, the following advantages are obtained:

First, hydrocarbons of low boiling points can be introduced into the exhaust conduit 16 upstream of the lean NOx catalyst 3.

Second, the introduction of the hydrocarbons of low boiling points increases the NOx purification rate of the lean NOx catalyst 3.

Third, the improvement of the lean NOx purification rate of the lean NOx catalyst is attained without installation of a particular hydrocarbon source different from the fuel source.

Fourth, introduction of hydrocarbons of low boiling points rather than of high boiling points suppresses HC emission.

## Claims

1. An exhaust gas purification system for an internal combustion engine wherein the internal combustion engine (1) is capable of fuel combustion at lean air-fuel ratios and has an exhaust manifold (14) and an exhaust conduit (16) connected to the manifold (14), the exhaust gas purification system comprising
a catalyst (3) installed in the exhaust conduit (16) of the engine and constructed to reduce nitrogen oxides included in exhaust gas from the engine in the presence of hydrocarbons;
an HC producing means (2, 4, 6, 11, 15, 21, 22, 23, 24, 25, 26, 30, 32) for producing hydrocarbons of low boiling points from fuel for combustion in the engine; and
an HC supply means (7, 8, 9, 10, 13, 27, 28, 29) for supplying the hydrocarbons of low boiling points produced by the HC producing means to the exhaust conduit (16) upstream of the catalyst;
characterized in that said catalyst (3) is constructed of zeolite carrying at least one kind of metal selected from transition metals and noble metals and reduces said nitrogen oxides under oxidizing conditions, and in that the HC producing means comprises means (2, 4, 6, 11, 15) for producing hydrocarbons of low boiling points by thermally cracking at least a portion of the fuel for the engine.

2. An exhaust gas purification system for an internal combustion engine according to claim 1, wherein the HC producing means comprises a fuel cracking chamber (11) provided adjacent to and separated from the exhaust manifold (14) by a heat conductive manifold wall (17).

3. An exhaust gas purification system for an internal combustion engine according to claim 2, wherein the HC producing means includes an injection nozzle (6) provided at the fuel cracking chamber (11) for injecting fuel into the fuel cracking chamber (11) and a branch pipe (15) leading fuel from a fuel pump (2) to the injection nozzle (6).

4. An exhaust gas purification system for an internal combustion engine according to claim 1, wherein the HC supply means includes a pipe (7) extending from the fuel cracking chamber (11) to the exhaust conduit (16) upstream of the catalyst (3) and a flow control valve (9) installed in the pipe (7).

5. An exhaust gas purification system for an internal combustion engine according to claim 1, wherein the internal combustion engine (1) comprises a diesel engine, and the fuel for combustion in the engine comprises light oil.

6. An exhaust gas purification system for an internal combustion engine according to claim 1, wherein the HC producing means includes means (24, 25, 26, 30, 32) for producing hydrocarbons of low boiling points by not only cracking but also by fractional distillation of at least a portion of the fuel for combustion in the engine.

7. An exhaust gas purification system for an internal combustion engine according to claim 6, wherein the HC producing means includes a fuel pump (2), a fuel return pipe (30) connected to the fuel pump (2), a zigzag portion (32) formed in the fuel return pipe (30) in the vicinity of the exhaust manifold (14), and a gas/liquid separator (24) located in the fuel return pipe (30) downstream of the zigzag portion (32).

8. An exhaust gas purification system for an internal combustion engine according to claim 6, wherein the HC supply means (13, 27, 28, 29) includes an HC injection nozzle (27) provided at the exhaust conduit (16) upstream of the catalyst (3) and an HC supply pump (29) for pressurizing the hydrocarbons of low boiling points.

## Patentansprüche

1. Reinigungssystem für Abgase eines Verbrennungsmotors, wobei der Verbrennungsmotor (1) Kraftstoff bei mageren Luft-Kraftstoff-Verhältnissen verbrennen kann und einen Auspuffkrümmer (14) und eine mit dem Krümmer (14) verbundene Auspuffleitung (16) hat, wobei das Reinigungssystem für Abgase folgendes aufweist:
einen Katalysator (3), der in der Abgasleitung (16) des Motors eingebaut und konstruiert ist, um im, vom Motor kommenden Abgas enthaltene Stickstoffoxide in Gegenwart von Kohlenwasserstoffen zu reduzieren;
eine HC-Erzeugungseinrichtung (2, 4, 6, 11, 15, 21, 22, 23, 24, 25, 26, 30, 32) für die Erzeugung von Kohlenwasserstoffen mit niedrigen Siedepunkten aus Kraftstoff für die Verbrennung im Motor; und
eine HC-Versorgungseinrichtung (7, 8, 9, 10, 13, 27, 28, 29) für die Zufuhr der mittels der HC-Erzeugungseinrichtung erzeugten Kohlenwasserstoffe mit niedrigen Siedepunkten zur stromaufwärts vom Katalysator befindlichen Abgasleitung (16);
dadurch gekennzeichnet, daß der Katalysator (3) aus Zeolith besteht, das zumindest eine aus Übergangsmetallen und Edelmetallen ausgewählte Metallgattung enthält und die Stickstoffoxide unter oxidierenden Bedingungen reduziert, und daß die HC-Erzeugungseinrichtung eine Einrichtung (2, 4, 6, 11, 15) für die Erzeugung von Kohlenwasserstoffen mit niedrigen Siedepunkten durch thermisches Spalten von zumindest einem Teil des Kraftstoffes für den Motor aufweist.

2. Reinigungssystem für Abgase eines Verbrennungsmotors gemäß Anspruch 1, wobei die HC-Erzeugungseinrichtung eine Kraftstoffspaltungskammer (11) aufweist, welche neben dem Auspuffkrümmer (14) vorgesehen und mittels einer wärmeleitenden Krümmerwand (17) von diesem abgetrennt ist.

3. Reinigungssystem für Abgase eines Verbrennungsmotors gemäß Anspruch 2, wobei die HC-Erzeugungseinrichtung für die Einspritzung von Kraftstoff in die Kraftstoffspaltungskammer (11) an der Kraftstoffspaltungskammer (11) eine Einspritzdüse (6) und eine, Kraftstoff von einer Kraftstoffpumpe (2) zur Einspritzdüse (6) leitende Abzweigrohrleitung (15) aufweist.

4. Reinigungssystem für Abgase eines Verbrennungsmotors gemäß Anspruch 1, wobei die HC-Versorgungseinrichtung sich stromaufwärts vom Katalysator (3) eine, von der Kraftstoffspaltungskammer (11) zur Auspuffleitung (16) erstreckenden Rohrleitung (7) und ein in der Rohrleitung (7) eingebautes Durchflußregelventil (9) aufweist.

5. Reinigungssystem für Abgase eines Verbrennungsmotors gemäß Anspruch 1, wobei der Verbrennungsmotor (1) ein Dieselmotor ist, wobei der Kraftstoff für die Verbrennung im Motor dünnflüssiges Öl ist.

6. Reinigungssystem für Abgase eines Verbrennungsmotors gemäß Anspruch 1, wobei die HC-Erzeugungseinrichtung eine Einrichtung (24, 25, 26, 30, 32) für die Erzeugung von Kohlenwasserstoffen mit niedrigen Siedepunkten nicht nur durch Spalten sondern auch durch fraktionelle Destillation von zumindest einem Teil des Kraftstoffes für die Verbrennung im Motor hat.

7. Reinigungssystem für Abgase eines Verbrennungsmotors gemäß Anspruch 6, wobei die HC-Erzeugungseinrichtung eine Kraftstoffpumpe (2) enthält, eine mit der Kraftstoffpumpe (2) verbundene Kraftstoffrückführrohrleitung (30), einen, neben dem Auspuffkrümmer (14) in der Kraftstoffrückführrohrleitung (30) gebildeten zickzackförmigen Abschnitt (32) und einen, in der Kraftstoffrückführrohrleitung (30) stromabwärts von dem zickzackförmigen Abschnitt (32) angeordneten Gas/Flüssigkeitsabscheider (24).

8. Reinigungssystem für Abgase eines Verbrennungsmotors gemäß Anspruch 6, wobei die HC-Zufuhreinrichtung (13, 27, 28, 29) eine, stromaufwärts vom Katalysator (3) an der Abgasleitung (16) vorgesehene HC-Einspritzdüse (27) und eine HC-Zufuhrpumpe (29) aufweist, um die Kohlenwasserstoffe mit niedrigen Siedepunkten unter Druck zu setzen.

## Revendications

1. Un système d'épuration de gaz d'échappement pour un moteur à combustion interne, dans lequel le moteur à combustion interne (1) est apte à brûler du combustible avec des rapports air-combustible en mélange pauvre et comporte un collecteur d'échappement (14) et un conduit d'échappement (16) relié au collecteur d'échappement (14), le système d'épuration de gaz d'échappement comprenant un catalyseur (3) installé dans le conduit d'échappement (16) du moteur et prévu pour réduire les oxydes d'azote inclus dans les gaz d'échappement du moteur, en présence d'hydrocarbures; des moyens de fabrication d'hydrocarbures (2, 4, 6, 11, 15, 21, 22, 23, 24, 25, 26, 30, 32) pour fabriquer des hydrocarbures à bas point d'ébullition à partir du carburant brûlé dans le moteur; et des moyens d'alimentation en hydrocarbures (7, 8, 9, 10, 13, 27, 28, 29) pour fournir les hydrocarbures à bas point de fusion fabriqués par des moyens de fabrication d'hydrocarbures au conduit d'échappement 16 en amont du catalyseur, caractérisé en ce que ledit catalyseur (3) est réalisé en zéolite portant au moins un type de métal sélectionné parmi les métaux de transition et les métaux nobles, et réduit lesdits oxydes d'azote dans des conditions oxydantes, et en ce que les moyens de fabrication d'hydrocarbures comportent des moyens (2, 4, 6, 11, 15) pour fabriquer des hydrocarbures à bas point d'ébullition par craquage thermique d'au moins une partie du carburant du moteur.

2. Un système d'épuration de gaz d'échappement pour un moteur à combustion interne selon la revendication 1, dans lequel les moyens de fabrication d'hydrocarbures comportent une chambre de craquage de carburant (11) prévue adjacente à et séparée du collecteur d'échappement (14) par une paroi de collecteur conductrice de la chaleur (17).

3. Un système d'épuration de gaz d'échappement pour un moteur à combustion interne selon la revendication 2, dans lequel les moyens de fabrication d'hydrocarbures comportent une buse d'injection (6) prévue sur la chambre de craquage de carburant (11) pour injecter du carburant dans la chambre de craquage de carburant (11) et un tube de branchement (15) amenant du carburant depuis une pompe à carburant (2) à une buse d'injection (6).

4. Un système d'épuration de gaz d'échappement pour un moteur à combustion interne selon la revendication 1, dans lequel les moyens d'alimentation en hydrocarbures comportent un tube (7) s'étendant de la chambre de craquage de carburant (11) au conduit d'échappement (16) à l'amont du catalyseur (3) et une valve de commande de débit (9) installée dans la conduite (7).

5. Un système de purification de gaz d'échappement pour un moteur à combustion interne selon la revendication 1, dans lequel le moteur à combustion interne (1) comporte un moteur Diesel et le carburant destiné à la combustion dans le moteur comporte des hydrocarbures relativement légers.

6. Un système d'épuration de gaz d'échappement pour un moteur à combustion interne selon la revendication 1, dans lequel les moyens de fabrication d'hydrocarbures comportent des moyens (24, 25, 26, 30, 32) pour fabriquer des hydrocarbures à bas point d'ébullition, non seulement par craquage, mais également par distillation fractionnée d'au moins une partie du carburant destiné à la combustion dans le moteur.

7. Un système d'épuration de gaz d'échappement pour un moteur à combustion interne selon la revendication 6, dans lequel les moyens de fabrication d'hydrocarbures comportent une pompe à carburant (2), un tube de retour de carburant (30) relié à la pompe à carburant (2), une partie en zigzag (32) formée dans le tube de retour de carburant (30), à proximité du collecteur d'échappement (14) et un séparateur gaz/liquide (24) disposé dans le tube de retour de carburant (30) en aval de la partie en zigzag (32).

8. Un système d'épuration de gaz d'échappement pour un moteur à combustion interne selon la revendication 6, dans lequel les moyens d'alimentation en hydrocarbures (13, 27, 28, 29) comportent une buse d'injection d'hydrocarbure (27) prévue sur le conduit d'échappement (16) en amont du catalyseur (3) et une pompe d'alimentation en hydrocarbures (29) pour mettre sous pression les hydrocarbures à bas point d'ébullition.
